# EUROPEAN PATENT SPECIFICATION

(11) **EP 1 065 832 B1**
(45) Date of publication and mention of the grant of the patent: **17.11.2004**
(21) Application number: 99305183.8
(22) Date of filing: 30.06.1999
(51) Int. Cl.: H04L 12/413, H04L 29/06, G06F 13/12

(54) **Method and system of purging and recovering frames of data**
Verfahren und Vorrichtung zur Bereinigung und Wiedererlangung von Datenrahmen
Procédé et système pour épuration et récupération de trames de données

(43) Date of publication of application: 03.01.2001
(73) Proprietor: Texas Instruments Incorporated, Dallas, Texas 75251 (US); TEXAS INSTRUMENTS LIMITED, Northampton NN4 7ZE (GB)
(72) Inventor: Rowell, Anthony, Irchester, Northants. NN29 7ED (GB); Batty, Sean, Marston Moretaine, Beds. MK43 0GW (GB)
(74) Representative: Holt, Michael

(56) References cited:
- US-A- 5 805 927

## Description

### TECHNICAL FIELD OF THE INVENTION

The present invention relates generally to data communications, and more particularly to a method and system for communicating data over shared access media.

### BACKGROUND OF THE INVENTION

Ethernet is by far the most widely used networking topology today. The Institute for Electrical and Electronic Engineers (IEEE) defines the Ethernet standard as IEEE Standard 802.3. The 802.3 standard not only defines rules for configuring an Ethernet but also specifies how elements in an Ethernet network interact with one another. The purpose of the Ethernet standards is to ensure that network equipment and network protocols will communicate efficiently. While the 802.3 IEEE standard defines transmissions at 10 megabits per second (Mbps), the 802.3u IEEE standard defines faster transmissions at 100 Mbps (Fast Ethernet) and the 802.3ab IEEE standard defines even faster transmissions at 1000 Mbps (Gigabit Ethernet) each with minimal changes in the cabling structure used for transmissions at 10 Mbps. All three Ethernet transmission speeds use the same IEEE 802.3 frame format, full-duplex operation and flow control mechanisms. In half-duplex mode, Gigabit Ethernet also follows the same carrier sense multiple access with collision detection (CSMA/CD) access method to resolve contention for the shared media. Because of the faster speeds, however, additional efficiencies may be needed in certain areas of operation within the networking protocol.

For example, to ensure that no node may completely receive a frame before the transmitting node has finished sending it, the IEEE Ethernet standards define a minimum frame size which is related to the distance which the network spans, the type of media being used and the number of repeaters which the signal may have to pass through to reach the furthest part of the LAN. Together these define a value known as the Ethernet Slot Time.

Thus, one area where the faster speeds may generate the need for greater efficiencies is in managing storage and retrieval of data in various memory buffers within the communication device. This need is particularly important in Gigabit Ethernet transmissions where the slot time is much greater than the time needed to transfer one buffer.

Patent document US-A-5 805 927 (8 September 1998) discloses a method for transferring frames received from an I/O Ethernet adapter to the main memory of a computer. The transfer is done using a DMA controller and multiple sets of registers which identify memory location addresses for the frame transfers.

### SUMMARY OF THE INVENTION

In accordance with the present invention, a method and system of communicating data over shared access media are provided which substantially eliminates or reduces disadvantages and problems associated with prior methods and systems of communicating data.

The present invention is an improved method and system for purging and recovering data frames in a shared access media environment using shadow buffer count registers and shadow load pointer registers for storing and retrieving pointer and counter information.

In another aspect of the present invention the shadow registers are utilized in both the transmit and receive directions of data flow.

These and other features of the invention that will be apparent to those skilled in the art from the following detailed description of the invention, taken together with the accompanying drawings.

### DESCRIPTION OF THE DRAWINGS

Fig. 1 is a block diagram illustrating one embodiment of a communications device which operates in accordance with the present invention; and
Fig. 2 shows a flow diagram illustrating operation of the communications device in accordance with one mode of operation of the present invention.

### DETAILED DESCRIPTION OF THE INVENTION

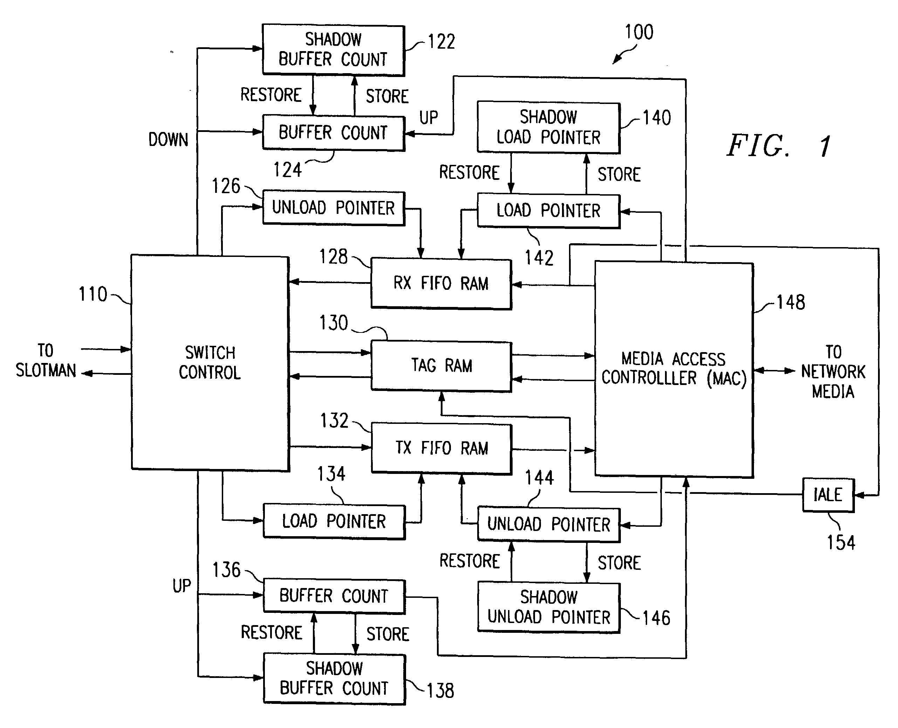

Fig. 1 shows an exemplary switching device which operates in accordance with the present invention. The exemplary switching device 100 includes a media access controller (MAC) 148 and a physical layer device (PHY) 110. The MAC 148 interfaces the exemplary switching device 100 directly with the network media. Four major types of media in use in Ethernet networks today include thickwire for 10BASE5 networks, thin coax for 10BASE2 networks, unshielded twisted pair (UTP) for 10BASE-T networks and fiber optic for 10BASE-FL or Fiber-Optic Inter-Repeater Link (FOIRL) networks. Consequently, as understood by one skilled in the art, each different type of network media requires a different MAC device.

The exemplary switching device 100 receives and transmits in a virtual local area network (VLAN) environment in which end stations are logically grouped within a bridged network infrastructure thus minimizing the amount of manual configuration required when a user is added to, changed, or moved within the network. The VLAN effectively de-couples the logical network configuration from the physical wiring thus enabling user services to be defined by the capabilities defined for that particular individual or VLAN group rather than that defined for the physical wiring connection. The architecture and services provided in VLANs is defined in IEEE 802.1Q standard, which is herein incorporated by reference.

Each frame transmitted or received in a switching device that operates in a VLAN environment may be classified as a tagged frame or an untagged frame. A tagged frame is a frame that includes a tag header. A tag header is the four bytes immediately following the source address and comprises a 2-byte tag protocol identifier (TPID) and a 2-byte tag control information (TCI). An untagged frame is a frame that does not include a tag header. IEEE 802.1Q also defines a 12-bit value (referred to as the IEEE 802.1Q VLAN ID, VLAN ID or VID) which is used to identify the VLAN associated with a frame.

Frames of data received through the MAC 148 are buffered in RX FIFO RAM 128 before storage in an external buffer memory under control of queue management (QM) logic in the PHY 110. Both the QM logic and MAC 148 apply round-robin arbitration to maintain bandwidth and fast data transfer of the first-in, first-out (FIFO) subsystem without contention.

For each 64K bits of data stored in the RX FIFO RAM 128 by the MAC 148, an associated tag is created and stored in the TAG RAM 130 by the MAC 148. An address associated with the tag is generated by Internal Address Lookup Engine (IALE) 154. The IALE 154 extracts each received frame's destination address, source address and IEEE 802.1 Q VLAN ID and then by comparing these against its internal records, determines on which port(s) the frame should be transmitted. The IALE 154 creates a port routing code in which each bit (marked with a one) represents a potential destination port for the frame. This code is modified as it proceeds through the frame-routing algorithm implemented in the IALE 154. If the final code is all zeroes, then the frame is discarded. If it is not, then the frame is transmitted on every port marked by a one within the code. The tag is later used by the QM logic in the PHY 110 which reconstructs the tag in order to instruct the MAC 148 to retrieve the data out of the TX FIFO RAM 132. In the exemplary switching device 100 of the present invention, the tags are 8 bits wide. As the data is stored in the RX FIFO RAM 128, the MAC 148 also updates buffer counter 124 accordingly.

As data is being received through the MAC 148 and buffered in the RX FIFO RAM 128, it may be determined that a portion of that data is no longer needed. It may be determined, for example, that a collision has occurred and a backoff stategy needs to be employed. The backoff strategy may then indicate, for example, that the data stored four buffers ago is no longer needed. In the exemplary switching device of the present invention, up to twenty-four buffers may be stored in the RX FIFO RAM 128 with an associated tag. Thus, in the present invention, to remove the fourth buffer in, instead of moving the buffer counter 124 four times to get to the data to be purged, the buffer counter and pointer register are restored through shadow buffer counter and pointer register, respectively.

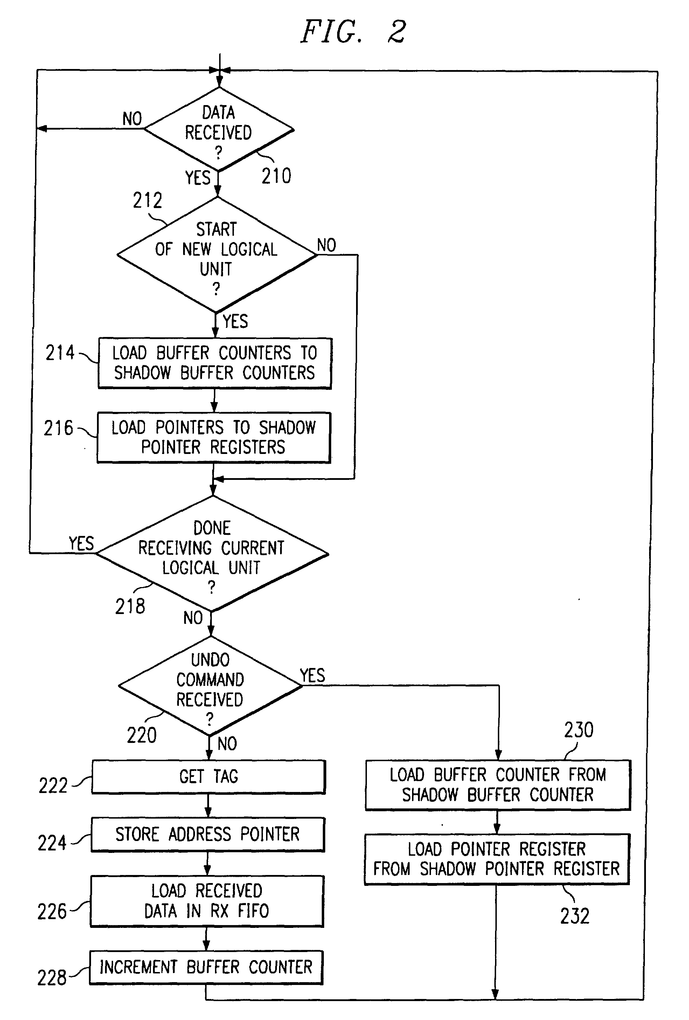

Operation of the exemplary switching device 100 in accordance with the present invention is further detailed in the flow diagram shown in Fig. 2. If at decision block 210 data is received by the MAC 148, processing continues to decision block 212. At decision block 212, if the start of a new logical unit of data is indicated, processing continues to block 214. At block 214, the information currently stored in the buffer counter 124 is stored to shadow buffer counter 122 in response to a signal from the MAC 148. Additionally, as shown at block 216, the information currently stored in load pointer register 142 is stored to shadow load pointer register 140. Processing then continues at decision block 218. Referring back to decision block 212, if the start of a new logical unit of data was not indicated, processing would then also continue at decision block 218.

At decision block 218, if all of the current logical unit has been received, processing continues at decision block 210. Otherwise, processing continues at decision block 220. At decision block 220, if an undo command has not been received, processing continues at block 222 where the tag associated with the logical unit currently being processed is retrieved from the tag ram 130. The address associated with the tag and generated by the IALE 154 is then stored in the load pointer register 142 as indicated at block 224. At block 226, the received data is then stored in the RX FIFO RAM 128. At block 228, the buffer counter 124 is then incremented and processing continues at decision block 210.

If, at decision block 220 an undo command has been received, processing continues at block 230 where the data from the shadow buffer counter 122 is stored in the buffer counter 124. Correspondingly, the data from the shadow load pointer register 140 is stored in the load pointer register 142 as indicated at block 232. At block 234, a switch command is sent to the PHY 110 to indicate that the buffer counter 124 has been reinitialized. Processing then continues at decision block 210.

Upon transmission, frame data is obtained from the external buffer memory and buffered temporarily into the TX FIFO RAM 132 before transmission on the relevant MAC 148 port. If a collision occurs during transmission, data recovery and retransmission occur from the TX FIFO RAM 132. Again, similar to the discussion hereinabove with respect to receipt of frame data from the MAC 148, at the start of transmitting a logical unit of data from the TX FIFO RAM 132 through the MAC 148 buffer counter 136 is stored to shadow buffer counter 138 and unload pointer register 144 is stored to shadow unload pointer register 146.

### OTHER EMBODIMENTS

Although the present invention and its advantages have been described in detail, it should be understood that various changes, substitutions and alterations can be made herein within the scope of the appended claims.

## Claims

1. A method of managing data frames in a shared access media communications device, the method comprising the steps of:
initializing shadow registers (122, 140) with information stored in certain buffer count (124) and pointer (142) registers at the start of receiving frames of data from the shared access media;
updating said buffer count and pointer registers while continuing to receive said frames of data through the shared access media; and
if an undo command is received while receiving said frames of data through the shared access media, restoring buffer count and pointer registers from said shadow registers.

## Patentansprüche

1. Verfahren für das Management von Datenrahmen in einer Kommunikationsvorrichtung für ein Medium mit Gemeinschaftszugriff, wobei das Verfahren die folgenden Schritte umfasst:
Initialisieren von Schattenregistern (122, 140) mit Informationen, die in einem bestimmten Pufferzähler (124) und in Zeigerregistern (142) gespeichert sind, wenn der Empfang von Datenrahmen von dem Medium mit Gemeinschaftszugriff beginnt;
Aktualisieren des Pufferzählers und der Zeigerregister, während der Empfang der Datenrahmen über das Medium mit Gemeinschaftszugriff fortgesetzt wird; und
falls ein Rückgängigmachungsbefehl empfangen wird, während Datenrahmen über das Medium mit Gemeinschaftszugriff empfangen werden, Wiederherstellen des Pufferzählers und der Zeigerregister aus den Schattenregistern.

## Revendications

1. Procédé de gestion de trames de données dans un dispositif de communication de média à accès partagé, le procédé comprenant les étapes consistant à:
initialiser des registres fantômes (122, 140) et des informations mémorisées dans un certain registre (124) de comptages de tampons (124) et de registres de pointeurs (142) au début de la réception de trames de données en provenance des média à accès partagé;
mettre à jour lesdits registres des comptages de tampons et de pointeurs tout en continuant à recevoir lesdites trames de données par l'intermédiaire desdits média à accès partagé; et
si une commande de non exécution est reçue pendant la réception desdites trames de données par l'intermédiaire des média à accès partagé, régénérer les registres de comptages des tampons et de pointeurs à partir desdits registres fantômes.
